# EUROPÄISCHE PATENTSCHRIFT

(11) **EP 1 655 525 B1**
(45) Veröffentlichungstag und Bekanntmachung des Hinweises auf die Patenterteilung: **01.10.2008**
(21) Anmeldenummer: 05101312.6
(22) Anmeldetag: 21.02.2005
(51) Int. Cl.: F16J 15/32

(54) **Abstreif- und/oder Dichtungselement sowie Verfahren zum Abdichten eines Kolbens und Spann- und/oder Stützelement**
Scraping and/or sealing element; Method for sealing a piston and a tensioning and/or a supporting element
Élément de raclage et/ou d'étanchéit; Methode pour étancher un piston et un élément d'appui et/ou de maintien

(30) Priorität: 03.11.2004 DE 102004053083
(43) Veröffentlichungstag der Anmeldung: 10.05.2006
(73) Patentinhaber: Ludwig Ehrhardt GmbH, 35321 Laubach (DE)
(72) Erfinder: Lehr, Adolf, 35321 Laubach (DE); Ehrhardt, Matthias, 35321 Laubach (DE)
(74) Vertreter: von Ahsen, Erwin-Detlef

(56) Entgegenhaltungen:
- EP-A- 1 394 452
- US-A- 3 622 168
- US-A- 3 642 293

## Beschreibung

Die Erfindung betrifft ein Abstreif- und/oder Dichtelement zum Abdichten von in einem Gehäuse beweglich geführten Kolben mit einer in einer Nut gehaltenen Dichtung. Ferner betrifft die Erfindung ein Verfahren zum Abdichten eines beweglichen Kolbens mittels einer in eine Nut eingelegten Dichtung und ein Spann- und/oder Stützelement mit einem Kolben, der in einem Gehäuse ein- und ausfahrbar geführt ist, wobei der Kolben mittels einer in einer Nut angeordneten Dichtung gedichtet ist.

Aus der Praxis sind Spannelemente bekannt, bei denen ein Werkstück, ein Werkzeug, eine Vorrichtung oder eine Form mittels eines ein- und ausfahrbaren Kolbens gespannt wird. Ebenso sind aus der Praxis Stützelemente bekannt, mittels deren an sich bereits gespannte Werkstücke zur Vermeidung unzulässiger Verformungen an bestimmten Stellen durch einen ein- und ausfahrbaren Kolben unterstütz werden. Insbesondere in Werkzeugmaschinen zur spanenden Bearbeitung muß der Kolben gedichtet sein, um ein Eindringen von Kühlflüssigkeit in ein Gehäuse des Spann- oder Stützelementes zu verhindern. Oft steht die Kühlflüssigkeit unter einem hohen Druck, so daß an die Dichtung zum Teil sehr hohe Anforderungen gestellt werden.

Bisher erfolgt die Abdichtung mittels eines festen Abstreifringes, der grobe Schmutzpartikel, wie zum Beispiel Späne, abhält. In einer Bohrung des Abstreifringes ist eine umlaufende Nut eingelassen, in welche eine Dichtung eingesetzt wird. Diese Dichtung, meist ein O-Ring, sorgt für eine flüssigkeitsdichte Abdichtung des Kolbens gegenüber dem Abstreifring. Die Tiefe der Nut ist dabei kleiner bemessen als der Durchmesser der Dichtung, also zum Beispiel des O-Rings. Hierdurch verformt sich der O-Ring elastisch und übt eine Normalkraft auf den Kolben aus, die für die Dichtigkeit sorgt. Der dabei dichtend gehaltene Druck hängt von der Höhe der Normalkraft (Vorspannung des O-Rings) und damit von dem Verhältnis von Nuttiefe zu O-Ring-Durchmesser ab. Ein niedriges Verhältnis bedeutet eine starke Verformung des O-Rings und damit eine hohe Normalkraft (hohe mechanische Vorspannung des O-Rings) und auch eine hohe Dichtigkeit.

Nachteilig dabei ist, daß mit der Normalkraft aufgrund des Reibungskoeffizienten proportional auch die Reibung zwischen Kolben und Dichtung ansteigt. Dieses kann insbesondere bei Stützelementen zu Störungen aufgrund undefinierter Anlagekräfte des Kolbens an das Werkstück führen.

Ein Quadring als Dichtelement für eine rotierende Welle ist aus der US-A-3 642 293 bekannt. Durch einen stufenartigen Versatz in der Rückwand der Nut kommt nur eine Lippe in Kontakt mit der Welle. Zusätzlich ist auch eine Seitenwand mit einem stufenartigen Absatz versehen, wodurch eine Lippe außer Kontakt zur Nut und zur Welle kommt. Hierdurch ist eine Dichtung gegenüber Fluiden mit unterschiedlich hohen Drücken, die von zwei Seiten gleichzeitig auf die Dichtung einwirken, bei gleichzeitig reduziertem Verschleiß möglich.

Hiervon ausgehend liegt der Erfindung das Problem zugrunde, eine Dichtung des Kolbens mit hoher Dichtkraft für hohe Flüssigkeitsdrücke bei niedriger Reibung vorzuschlagen.

Zur Lösung dieses Problem ist das erfindungsgemäße Abstreif- und/oder Dichtelement sowie das erfindungsgemäße Spann- und/oder Stützelement dadurch gekennzeichnet, daß die Dichtung ein Quadring mit einem karoförmigen Querschnitt ist und der Quadring derart schräg in der Nut angeordnet ist, daß eine erste Lippe des Quadringes am Kolben und die übrigen Lippen in der Nut anliegen.

Derartige Quadringe weisen bei niedriger Normalkraft und damit kleiner Reibung eine hohe Dichtkraft auf.

Indem der Quadring derart schräg in der Nut angeordnet wird, daß eine erste Lippe des Quadringes am Kolben und eine andere Lippe in der Nut dichtend anliegt, kann die Dichtkraft des Quadringes bei gleicher Reibung erhöht bzw. die Reibung bei gleicher Dichtkraft herabgesetzt werden. Der Quadring ist also etwas gekippt in der Nut angeordnet. Damit ist die Vorspannung, mit der die Lippen anliegen, die schräge Anordnung gegeben und ist sehr klein. Dennoch ergibt sich eine hohe Dichtkraft.

Nach einem Ausführungsbeispiel erhält man eine schräge Anordnung des Quadringes, indem die Nut für den Quadring in Radialrichtung des Kolbens gesehen schräg verlaufend oder stufenartig angeordnet ist. Wichtig dabei ist nur, daß eine innere Lippe des Quadringes höher oder tiefer als eine äußere Lippe angeordnet ist. Mit anderen Worten: die Lippen dürfen in Radialrichtung nicht zueinander fluchten. Vorzugsweise ist die Schulter nach außen hin ansteigend ausgebildet. Der Quadring ist dann mit einer oberen inneren Lippe zum Kolben hin verkippt. Hierdurch drückt auch bei diesem Ausführungsbeispiel eventuell durch den Spalt zwischen dem Stützring und dem Kolben in die Nut für den Quadring eindringendes Kühlmittel derart auf die an dem Kolben anliegende Lippe, daß deren Dichtkraft hierdurch erhöht wird. Dadurch wird auch die Dichtkraft der anderen Lippen erhöht, weil der Quadring die Tendenz erhält, sich zurückzudrehen.

Um ein gutes Verkippen des Quadringes zu ermöglichen, kann eine der Schulter gegenüberliegende Oberseite der Nut mit einer Hinterdrehung versehen sein.

Nach dem erfindungsgemäßen Verfahren erhält man die vorstehend angegebene schräge Anordnung des Quadringes nach einem weiteren Ausführungsbeispiel, in dem der Quadring, nachdem er in die Nut eingelegt wurde, um den Mittelpunkt seines karoförmigen Querschnitts gedreht wird. Mit anderen Worten: Der Querschnitt des Quadringes wird um seine, sich über den Umfang des Quadringes erstreckende, gedachte Mittelachse gedreht. Hierdurch kommt nur eine Lippe des Quadringes am Kolben und eine andere Lippe an einer Nutwand zum Anliegen.

Vorzugsweise wird der Querschnitt des Quadringes um etwa 90° gedreht. Hierdurch ergibt sich ein optimales Verhältnis von Reibung zu Dichtkraft. Obwohl an sich in der Praxis nur eine Drehung um 90° erfolgen wird, so liegt es auf der Hand, das aufgrund des Querschnitts des Quadringes auch eine Drehung um ein ganzzahliges Vielfaches von 90° möglich ist. Wichtig ist nur, daß eine Lippe am Kolben und wenigstens eine Lippe an einer der Nutwandungen über den gesamten Umfangsbereich des Kolbens anliegt.

Der Querschnitt des Quadringes sollte mit seiner dem Kolben zugewandten Innenseite vom Gehäuse weg, also mit anderen Worten zum freien Ende des Kolbens hin, verdreht werden. Hierdurch drückt eventuell durch den Spalt zwischen dem Stützring und dem Kolben in die Nut für den Quadring eindringendes Kühlmittel derart auf die an dem Kolben anliegende Lippe, daß deren Dichtkraft hierdurch erhöht wird. Dadurch wird auch die Dichtkraft der anderen Lippen erhöht, weil der Quadring die Tendenz erhält, sich zurückzudrehen.

Die Erfindung wird nachfolgend anhand eines in der Zeichnung dargestellten Ausführungsbeispiels näher erläutert. Es zeigen:
Fig. 1 ein Stützelement mit den Erfindungsmerkmalen im Längsschnitt,
Fig. 2 ein Detail II des Stützelementes gemäß Fig. 1 im Längsschnitt,
Fig. 3 ein Stützelement in perspektivischer Darstellung,
Fig. 4 ein weiteres Ausführungsbeispiel für einen Abstreifring für eine Stützelement mit den Erfindungsmerkmalen im Längsschnitt,
Fig. 5 ein Detail V des Abstreifrings gemäß Fig. 4 im Längsschnitt.

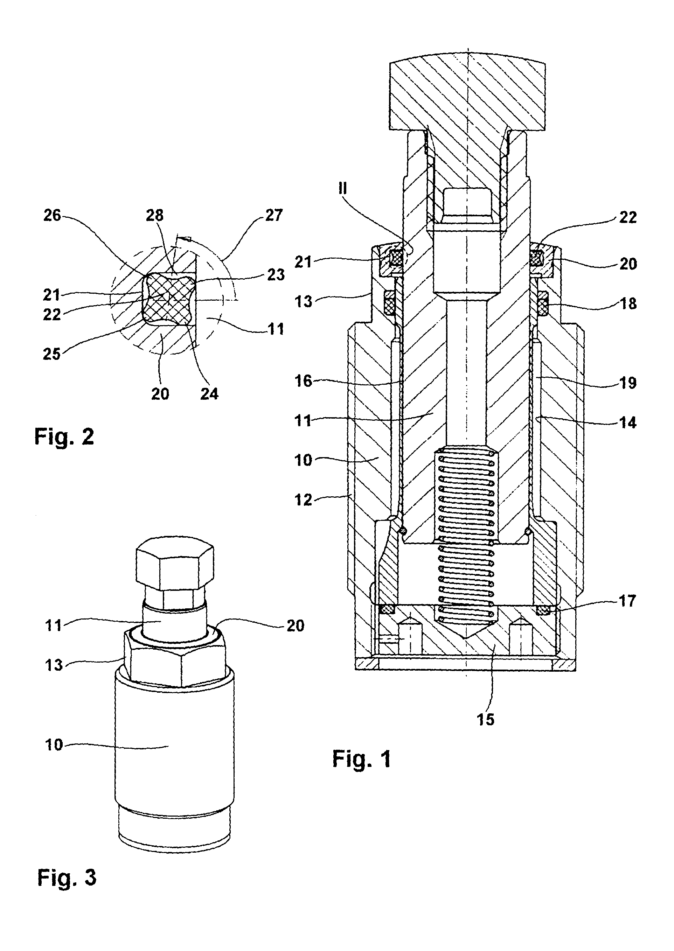

Das in Fig. 1 und 3 gezeigte Stützelement dient zum Abstützen eines an sich bereits gespannten Werkstücks in einer Werkzeugmaschine, um unzulässige Verformungen des Werkstücks während der Bearbeitung zu vermeiden. Das Stützelement weist ein Gehäuse 10 und einen aus- und einfahrbaren Kolben 11 auf. Das Gehäuse 10 ist an der Werkzeugmaschine, beispielsweise einem Maschinentisch befestigbar. Dieses kann beispielsweise, wie in Fig. 1 gezeigt, über ein Gewinde 12 an einer äußeren Mantelfläche des Gehäuses 10 erfolgen. Um das Stützelement bzw. das Gehäuse 10 in den Maschinentisch einschrauben zu können, ist das Gehäuse 10 ferner mit einem Außensechskant 13 für übliche Schraubenschlüssel versehen.

In dem Gehäuse 10 ist eine in Längsrichtung verlaufende, abgestufte Bohrung 14 vorgesehen. Diese Bohrung 14 ist einseitig durch einen Deckel 15 verschlossen. Ferner ist in der Bohrung 14 eine Klemmbuchse 16 vorgesehen, die einerseits gegenüber dem Deckel 15 und andererseits gegenüber dem Gehäuse 10 gedichtet ist (Dichtung 17 bzw. 18). Die Klemmbuchse 16 ist über einen Teil ihrer Länge mit einem kleineren Außendurchmesser versehen als der Innendurchmesser der Bohrung 14 in diesem Bereich. Zwischen der Klemmbuchse 16 und der Bohrung 14 ergibt sich somit ein Ringraum 19. Ist der Kolben 11 zur stützenden Anlage an das Werkstück gekommen, wird dieser Ringraum 19 mit Druckmittel beaufschlagt, so daß die Klemmbuchse 16 den Kolben 11 klemmt.

An der dem Deckel 15 gegenüber liegenden Stirnseite des Gehäuses 10 ist ein Abstreifring 20 eingesetzt. In diesem Abstreifring 20 und der Klemmbuchse 16 ist der ein- und ausfahrbare Kolben 11 geführt. An der dem Kolben 11 zugewandten Innenseite des Abstreifrings 20 ist eine Nut 21 vorgesehen, in die eine Dichtung, nämlich konkret ein Quadring 22 eingelegt ist. Wie insbesondere gut in Fig. 2 zu erkennen ist, weist der Quadring 22 einen etwa karoförmigen Querschnitt mit vier Lippen 23, 24, 25 und 26 auf. Die Nut 21 ist so bemessen, daß der Quadring 22 an sich etwa genau in die Nut 21 passen würde. Die durch die Lippen 23..26 gebildete Kantenlänge des Quadringes 22 paßt also zu der Tiefe und der Breite der Nut 21.

Bei der Montage wird der Quadring 22 in die Nut 21 um etwa 90°, konkret um knapp 90°, verdreht eingelegt. Dabei erfolgt eine Drehung des Querschnitts des Quadringes 22 um eine gedachte, umlaufende Mittellinie des Querschnitts. Die Drehrichtung ist so gewählt, daß die zum Kolben 11 weisende Innenseite des Quadringes vom Gehäuse 10 bzw. Deckel 15 wegbewegt wird, also in der Darstellung gemäß Fig. 1 nach oben. Die genaue Drehung ist durch einen Pfeil 27 in Fig. 2 näher gezeigt.

Die oben beschriebene Drehung des Quadringes in der beschriebenen Drehrichtung hat zusätzlich folgenden Effekt: Gelangt Kühlflüsigkeit unter hohem Druck durch den Spalt zwischen Abstreifring 20 und Kolben 11 in einen Freiraum 28 oberhalb des Quadringes 22, entsteht eine dynamische Kraft auf die am Kolben 11 anliegende Lippe 23. Diese dynamische Kraft hat die Tendenz, den Quadring 22 zurückzudrehen, was die Vorspannung des Quadringes 22 gegen den Kolben 11 und damit die Dichtkraft noch erhöht.

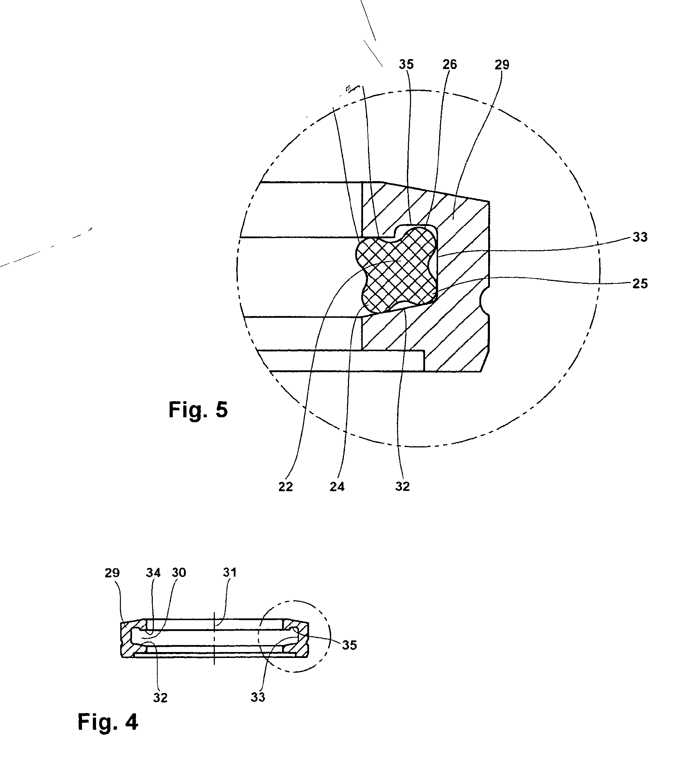

In Fig. 4 und 5 ist ein weiteres Ausführungsbeispiel eines Abstreifrings 29 gezeigt, wie er alternativ zu dem Abstreifring 20 in das Gehäuse 10 eingelegt werden kann. Eine an der zum Kolben 11 gewandten Innenseite des Abstreifringes 29 angeordnete Nut 30 ist so ausgebildet, daß sie nach außen (radial vom Kolben 11 weg) schräg in Ausfahrrichtung des Kolbens 11 gesehen ansteigt. Mit anderen Worten: die Nut 30 fällt zur Längsmittelachse 31 des Abstreifrings hin in Richtung auf den Deckel 15 ab.

Konkret ist die Nut 30 so ausgebildet, daß eine gemäß der Darstellung in Fig. 4 und 5 untere Schulter 32 nach innen, also zur Längsmittelachse 31 hin ab. Eine äußere Begrenzung 33 parallel zur Längsmittelachse 31 ausgebildet. Eine Oberseite der Nut 30 ist zunächst mit einer radial gerichteten Oberwandung 34 ausgebildet, welche sodann in einer Hinterdrehung 35 übergeht.

Durch die untere, schräge Schulter 32 ist der in die Nut 30 eingelegte Quadring 22 mit seiner Oberseite zum Kolben 11 hin verkippt angeordnet. Wie schon beim Ausführungsbeispiel gemäß Fig. 1 bis 3 kommt im wesentlichen nur die obere innere Lippe 23 zur Anlage am Kolben 11, während die übrigen Lippen 24, 25 und 26 dichtend in der Nut 30 liegen. Dabei liegt die äußere obere Lippe 26 in der Hinterdrehung 35, so daß sich der Quadring 22 ungehindert schräg stellen kann. Im Ergebnis ist also hinsichtlich der Dichtwirkung die selbe Wirkung erzielt, wie bei dem Ausführungsbeispiel gemäß Fig. 1 bis 3. Jedoch braucht der Quadring 22 nach dem Einlegen in die Nut 30 nicht mehr um den Mittelpunkt seines Querschnittes verdreht zu werden, was die Montage erleichtert.

### Bezugszeichenliste :

- 10: Gehäuse
- 11: Kolben
- 12: Gewinde
- 13: Sechskant
- 14: Bohrung
- 15: Deckel
- 16: Klemmbuchse
- 17: Dichtung
- 18: Dichtung
- 19: Ringraum
- 20: Abstreifring
- 21: Nut
- 22: Quadring
- 23: Lippe
- 24: Lippe
- 25: Lippe
- 26: Lippe
- 27: Pfeil
- 28: Freiraum
- 29: Abstreifring
- 30: Nut
- 31: Längsmittelachse
- 32: Schulter
- 33: Begrenzung
- 34: Oberwandung
- 35: Hinterdrehung

## Patentansprüche

1. Abstreif- und/oder Dichtanordnung zum Abdichten von in einem Gehäuse (10) beweglich geführten Kolben (11) mit einer in einer Nut (21, 30) gehaltenen Dichtung, **dadurch gekennzeichnet, daß** die Dichtung ein Quadring (22) mit einem karoförmigen Querschnitt ist, welcher derart schräg in der Nut (21, 30) angeordnet ist, daß eine erste Lippe (23) des Quadringes (22) am Kolben (11) und die übrigen Lippen (24, 25, 26) in der Nut (21, 30) dichtend anliegen.

2. Anordnung nach Anspruch 1, **dadurch gekennzeichnet, daß** die Nut (30) mit einer in Radialrichtung des Kolbens (11) gesehen schräg verlaufenden oder stufenartig abgesetzten, insbesondere nach außen hin ansteigenden, Schulter (32) ausgebildet ist.

3. Anordnung nach Anspruch 2, **dadurch gekennzeichnet, daß** eine der Schulter (32) gegenüberliegende Oberseite der Nut (30) mit einer Hinterdrehung (35) ausgebildet ist.

4. Verfahren zum Abdichten eines beweglichen Kolbens (11) mittels einer in eine Nut (21) eingelegten Dichtung, **dadurch gekennzeichnet, daß** in die Nut (21) als Dichtung ein Quadring (22) mit karoförmigem Querschnitt eingelegt wird und daß, nachdem der Quadring (22) in die Nut (21, 30) eingelegt ist, dieser Querschnitt (22) anschließend um seinen Mittelpunkt gedreht wird.

5. Verfahren nach Anspruch 4, **dadurch gekennzeichnet, daß** der Querschnitt um etwa 90° oder ein ganzzahliges Vielfaches von 90° gedreht wird.

6. Verfahren nach Anspruch 5, **dadurch gekennzeichnet, daß** der Querschnitt auf seiner dem Kolben (11) zugewandten Seite vom Gehäuse (11) weg gedreht wird.

7. Spann- und/oder Stützelement mit Kolben (11), der in einem Gehäuse (10) ein- und ausfahrbar geführt ist, wobei der Kolben (11) mittels einer in einer Nut (21) angeordneten Dichtung gedichtet ist, **gekennzeichnet durch** ein Abstreif- und/oder Dichtelement nach einem der Ansprüche 1 bis 3.

## Claims

1. Wiping and/or sealing device for sealing a piston (11) that is guided movably in a housing (10) with a seal held in a groove (21, 30), **characterised in that** the seal is a quad-ring (22) with a square cross section, which is arranged obliquely in the groove (21, 30) such that a first lip (23) of the quad-ring (22) is in contact with the piston (11) and the other lips (24, 25, 26) fit sealingly in the groove (21, 30).

2. Device according to Claim 1, **characterised in that** the groove (30) is designed with a shoulder (32) that extends obliquely or is stepped when viewed in the radial direction of the piston (11), in particular said shoulder (32) being designed such that it rises outwardly.

3. Device according to Claim 2, **characterised in that** a top side of the groove (30) located opposite the shoulder (32) is designed with a relief (35).

4. Method for sealing a movable piston (11) by means of a seal that is placed in a groove (21), **characterised in that** a quad-ring (22) with a square cross section is placed as the seal in the groove (21) and that after the qua- ring (22) has been placed into the groove (21, 30), said cross section (22) is then rotated about its centre point.

5. Method according to Claim 4, **characterised in that** the cross section is rotated by about 90° or an integral multiple of 90°.

6. Method according to Claim 5, **characterised in that** a side of the cross section facing the piston (11) is rotated away from the housing (10).

7. Clamping and/or support element comprising a piston (11) that can be retracted and extended in a housing (10), wherein the piston (11) is sealed by means of a seal arranged in a groove (21), **characterised by** a wiping and/or sealing element according to one of claims 1 to 3.

## Revendications

1. Dispositif pour enlever et/ou rendre étanche un carter ou boîtier (10) d'un piston guidé (11) muni d'une rainure (21, 30) pour le maintien d'un joint, **caractérisé en ce que** ce même joint est un joint « Quadring » (22) à section quatre angulaire carré, celui-ci étant disposé obliquement dans la rainure (21, 30), disposé de manière telle que la première lèvre (23) du joint « Quadring » (22) est au contact du piston (11), les lèvres restantes (24, 25, 26) étanchant la rainure (21, 30).

2. Dispositif selon la revendication 1, **caractérisé en ce que** la rainure (30) en vue radiale du piston (11) réalise un épaulement (32) disposé en biais ou étagé essentiellement vers l'extérieur.

3. Dispositif selon la revendication 2, **caractérisé en ce que** l'un des épaulements (32) situé en partie supérieure face à la rainure (30) est muni d'un détourage arrière (35).

4. Dispositif pour étancher un piston guidé et mobile (11) à l'aide d'un joint disposé dans une rainure (21), **caractérisé en ce que** la rainure (21) est munie d'un joint « Quadring » (22) à section quatre angulaire carrée et que, après avoir disposé ce joint « Quadring » (22) dans la rainure (21, 30) selon la coupe transversale, celui-ci sera mu autour de son point central.

5. Dispositif selon la revendication 4, **caractérisé en ce que** la section transversale sera détouré d'environ 90° ou d'un nombre entier autour de 90°.

6. Dispositif selon la revendication 5, **caractérisé en ce que** la section transversale disposée face au piston (11) en sera éloignée par rotation torsion.

7. Elément de serrage et/ou d'appui avec piston (11) du carter (10), s'y mouvant en dégagement ou en introduction, où le piston (11) par l'intermédiaire d'une rainure (21) est muni d'un joint approprié, **caractérisé en ce qu'**il correspond au dispositif selon les revendications 1 à 3.
